(19) Europäisches Patentamt / European Patent Office / Office européen des brevets

(11) **EP 2 423 504 A1**

(12) **EUROPEAN PATENT APPLICATION**

(43) Date of publication:
   **29.02.2012 Bulletin 2012/09**

(51) Int Cl.:
   *F03G 7/06* (2006.01)   *G02B 7/08* (2006.01)
   *H02N 10/00* (2006.01)   *G03B 3/10* (2006.01)

(21) Application number: **11178925.1**

(22) Date of filing: **25.08.2011**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **25.08.2010 JP 2010188729**

(71) Applicant: **Seiko Instruments Inc.**
   **Chiba-shi, Chiba (JP)**

(72) Inventors:
   • **Nobe, Tetsuya**
     **Chiba-shi,, Chiba (JP)**
   • **Yarita, Mitsuo**
     **Chiba-shi,, Chiba (JP)**

(74) Representative: **Cloughley, Peter Andrew**
   **Miller Sturt Kenyon**
   **9 John Street**
   **London WC1N 2ES (GB)**

(54) **Driver module, electronic device, method of controlling driving module**

(57)   The driving module controls the supply of current to a shape memory alloy member by setting a command value for an electrical resistance of the shape memory alloy member so that the lens frame is moved intermittently to thereby controlling the driving of driving means. The driving module includes control means which includes resistance detection means, command value generation means, and current supplying means. The command value generation means changes the command value gradually by a predetermined variation width $\Delta R$ so that the electrical resistance of the shape memory alloy member increases or decreases gradually by a predetermined width when the lens frame is moved intermittently. Moreover, the command value generation means performs a correction calculation which uses the ratio of an actual reference value $R_0$ of the electrical resistance of the shape memory alloy member to an ideal reference value $R_{stan}$ of the electrical resistance of the shape memory alloy member as a correction ratio to calculate a correction variation width by multiplying the correction ratio by an ideal variation width $R_{step}$ of the command value $R_t(_n)$ to thereby change the command value $R_t(_n)$ gradually using the correction variation width as the variation width $\Delta R$.

FIG.8

EP 2 423 504 A1

**Description**

The invention relates to a driving module that drives a lens frame holding a lens to perform an autofocus operation of focusing automatically, an electronic device, and a method of controlling the driving module.

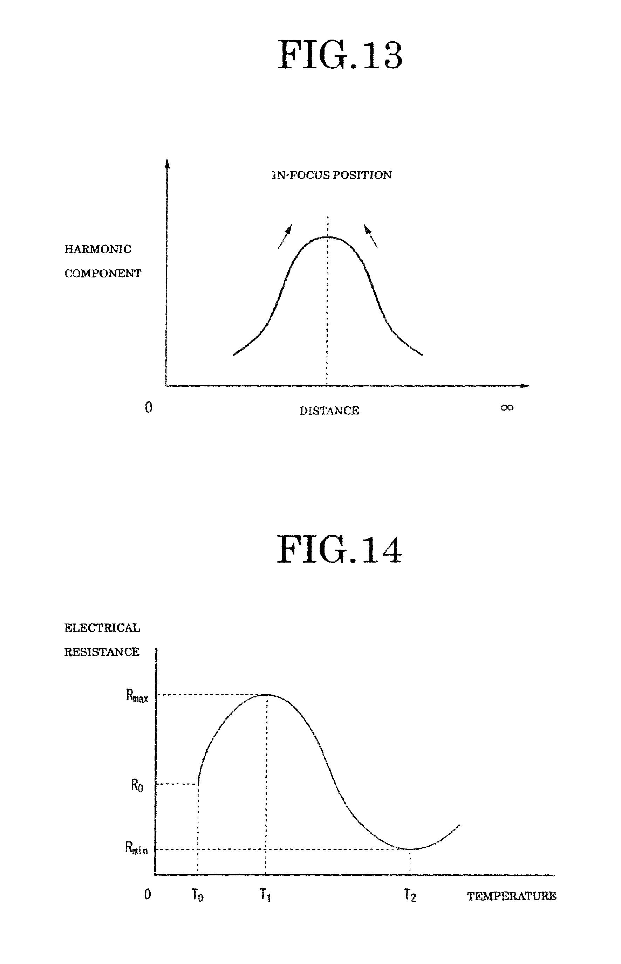

For example, in an imaging device having a lens such as a camera, it is necessary to perform an operation of moving the lens to a position (focus point) corresponding to the peak of a harmonic component of a video signal as shown in Fig. 13 during imaging. Many imaging devices having an autofocus function of performing this operation (focusing) automatically have been provided.

In the related art, as a driving module that realizes the autofocusing, a driving module that drives a lens frame using a deformation property of a shape memory alloy accompanied by a change in the temperature is proposed as disclosed in JP-A-2007-58075 (Patent Reference 1), for example. The driving module includes a support member, a lens frame capable of moving back and forth in a certain direction in relation to the support member, a spring member that elastically holds the lens frame, and driving means for driving the lens frame while resisting the restoring force of the spring member. The driving means includes pivotable arm portions engaged with the lens frame and a shape memory alloy wire of which both ends are wound and fixed at the arm portions.

According to the above-described driving module of the related art, by supplying current to the shape memory alloy wire, the shape memory alloy wire is contracted by heating accompanied by the supply of current. Moreover, when the shape memory alloy wire is contracted, the arm portions are pivoted, and the lens frame is pressed by the arm portions. Thus, the lens frame is moved toward one side along a certain direction. Moreover, when the supply of current is halted, the temperature of the shape memory alloy wire decreases, and the shape memory alloy wire is expanded. When the shape memory alloy wire is expanded, the arm portions are pivoted in the returning direction, and the lens frame is moved toward the other side along a certain direction by the biasing force of the spring member.

Moreover, the electrical resistance of the shape memory alloy is known to have correlation with the amount of deformation of the shape memory alloy. In the related art, a technique of monitoring the amount of deformation of a shape memory alloy based on the electrical resistance of the shape memory alloy is known (see JP-A-2006-183564 (Patent Reference 2), for example). Thus, by controlling the supply of current to the shape memory alloy wire while monitoring the amount of deformation of the shape memory alloy wire based on the electrical resistance of the shape memory alloy wire, it is possible to control the amount of deformation of the shape memory alloy and to move the lens frame to a target position.

However, the electrical resistance of the shape memory alloy described above changes like a curve as shown in Fig. 14 with respect to a change in temperature. Specifically, the electrical resistance increases gradually as the temperature rises from an initial temperature $T_0$. Moreover, the electrical resistance reaches its maximum and starts decreasing gradually at the point in time (temperature $T_1$) when the deformation of the shape memory alloy begins. The electrical resistance reaches its minimum and starts increasing gradually again at the point in time (temperature $T_2$) when the deformation of the shape memory alloy reaches its limit and converges. That is, the electrical resistance $R_{max}$ reaches its maximum at the point in time when the deformation of the shape memory alloy begins, and the electrical resistance $R_{min}$ reaches its minimum at the point in time when the deformation of the shape memory alloy converges.

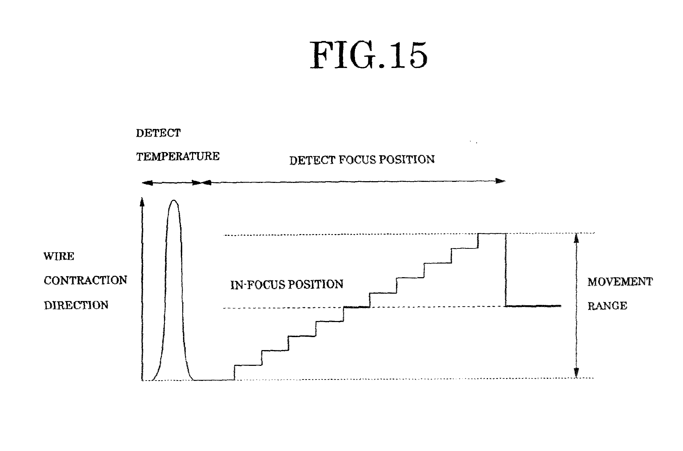

Moreover, the above-described driving module of the related art is operated, for example, as shown in Fig. 15. That is, first, a calibration operation is performed whenever an imaging device is turned on. That is, current is supplied to the shape memory alloy wire so as to contract the shape memory alloy wire up to its limit. In this way, the maximum electrical resistance $R_{max}$ and the minimum electrical resistance $R_{min}$ are detected, and an operation range of the driving module is detected. Subsequently, current is supplied to the shape memory alloy wire using the maximum electrical resistance $R_{max}$ as a command value so as to increase the electrical resistance of the shape memory alloy wire to an electrical resistance immediately before a deformation start point. Subsequently, current is supplied to the shape memory alloy wire to gradually decrease the electrical resistance of the shape memory alloy wire by a predetermined width. In this way, the shape memory alloy wire is gradually contracted, and the lens frame is moved over the total movement range. At that time, a focus point at which the contrast of an image reaches the highest is detected. Subsequently, the electrical resistance of the shape memory alloy wires is increased up to the electrical resistance at the focus point so as to expand the shape memory alloy wire. In this way, the lens frame is moved to an in-focus position, and focusing of the lens is realized.

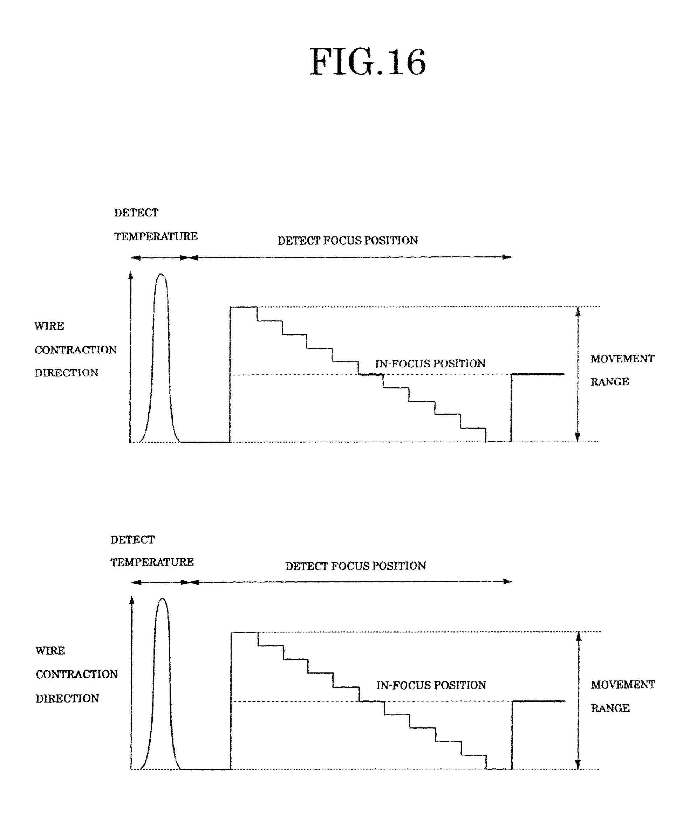

Moreover, as the operation of the above-described driving module of the related art, an operation as shown in Fig. 16 may be considered, for example. That is, first, the calibration operation is performed. Subsequently, current is supplied to the shape memory alloy wire using the minimum electrical resistance $R_{min}$ as a command value so as to contract the shape memory alloy wire up to its limit. Subsequently, the electrical resistance of the shape memory alloy wire is gradually increased by a predetermined width, whereby the shape memory alloy wire is gradually expanded, and the lens frame is moved over the total movement range. At that time, a focus point at which the contrast of an image reaches the highest is detected. Subsequently, the electrical resistance of the shape memory alloy wire is decreased up to the electrical resistance at the focus point so as to contract the shape memory alloy wire. In this way, the lens frame is moved to an in-focus position, and focusing of the lens is realized.

However, in the above-described technique of the related art, if there is an error in the line diameter during the manufacturing of the shape memory alloy wire, an individual difference occurs in the amount of deformation of the shape memory alloy wire with respect to the command value. That is, if there is an error in the line diameter of the shape memory alloy wire, the initial electrical resistance of the shape memory alloy wire fluctuates. The sensitivity of the shape memory alloy wire with respect to the supply of current, namely a change (gain) in the length of the shape memory alloy wire per a unit resistance depends on the initial electrical resistance of the shape memory alloy wire as given in Expression 1 below. Therefore, if the initial electrical resistance fluctuates as described above, the sensitivity of the shape memory alloy wire also fluctuates. Thus, an individual difference occurs in the amount of deformation of the shape memory alloy wire with respect to the command value.

[Expression 1]

$$ G \;=\; \frac{L0}{R0} \cdot \frac{1}{\alpha + 1} \qquad \cdots (1) $$

G: gain (change in length per unit resistance)
L0: initial length (predetermined dimension) of shape memory alloy wire
R0: initial electrical resistance of shape memory alloy wire
$\alpha$: ratio (predetermined value) of length after contraction to initial length of shape memory alloy wire

As described above, if an individual difference occurs in the amount of deformation of the shape memory alloy wire with respect to the command value, when the electrical resistance of the shape memory alloy wire is gradually changed by a predetermined width, the movement width of the lens frame fluctuates. Thus, there is a problem in that it is difficult to secure autofocus accuracy. For example, in a shape memory alloy wire in which the amount of deformation is large, the scanning interval decreases too much. Thus, there is a problem in that it is difficult to secure autofocus accuracy. On the other hand, in a shape memory alloy wire in which the amount of deformation is small, the number of steps needed for obtaining a necessary amount of movement increases. Thus, there is a problem in that the time up to the end of autofocusing increases.

The invention has been made in view of the above problems of the related art and an object of the invention is to provide a driving module capable of suppressing a fluctuation in the movement width of the lens frame even when there is an error in the shape of a shape memory alloy member and the sensitivity of the shape memory alloy member fluctuates and securing high autofocus accuracy, an electronic device, and a method of controlling the driving module.

A driving module according to the invention includes: a support member; a lens frame provided so as to be movable back and forth in a certain direction in relation to the support member and hold the lens; a spring member that elastically holds the lens frame; driving means having a shape memory alloy member capable of being deformed through heating by supplying current thereto, for driving the lens frame while resisting a restoring force of the spring member when the shape memory alloy member is deformed by the supply of current; and control means for controlling the driving of the driving means by setting a command value for an electrical resistance of the shape memory alloy member so that the lens frame is moved intermittently and controlling the supply of current to the shape memory alloy member, wherein the control means includes resistance detection means for detecting the electrical resistance of the shape memory alloy member, command value generation means for generating the command value, and current supplying means for supplying current to the shape memory alloy member so that a detection value detected by the resistance detection means is identical to the command value generated by the command value generation means, and wherein the command value generation means changes the command value gradually by a predetermined variation width so that the electrical resistance of the shape memory alloy member increases or decreases gradually by a predetermined width when the lens frame is moved intermittently, and performs a correction calculation which uses the ratio of an actual reference value of the electrical resistance of the shape memory alloy member to an ideal reference value of the electrical resistance of the shape memory alloy member as a correction ratio to calculate a correction variation width by multiplying the correction ratio by an ideal variation width of the command value, to thereby change the command value gradually using the correction variation width as the variation width.

In the driving module described above, even if there is an error in the shape of the shape memory alloy member and the sensitivity fluctuates, the variation width of the command value is corrected in accordance with the fluctuation. For example, when the actual gain of the shape memory alloy member is greater than the ideal gain, the variation width of the command value is corrected so as to be decreased accordingly. Moreover, when the actual gain of the shape memory alloy member is smaller than the ideal gain, the variation width of the command value is corrected so as to be increased accordingly. In this way, even when there is an error in the shape of the shape memory alloy member, the fluctuation in the amount of deformation of the shape memory alloy member with respect to the command value is suppressed. Therefore, when the electrical resistance of the shape memory alloy member is gradually changed by a predetermined width so that the lens frame is moved intermittently, the lens frame is moved intermittently by a predetermined width.

If the actual electrical resistance of the shape memory alloy member is smaller than the ideal reference value, since the gain of the shape memory alloy member increases, the total movement range of the lens frame increases when the electrical resistance of the shape memory alloy member is gradually changed by a predetermined width. In this case, since the amount of deformation of the lens frame per one step increases, although the focusing accuracy may decrease to some extent, it is possible to detect a focus point. In contrast, when the actual electrical resistance of the shape memory alloy member is greater than the ideal reference value, since the gain of the shape memory alloy member decreases, the total movement range of the lens frame decreases when the electrical resistance of the shape memory alloy member is gradually changed by a predetermined width. In this case, there is a problem in that the total movement range of the lens frame is located outside an in-focus position and it is difficult to detect a focus point.

Therefore, in the driving module of the invention, it is preferable that the command value generation means changes the command value gradually using the correction variation width as the variation width when the actual reference value is greater than the ideal reference value and change the command value gradually using the ideal variation width as the variation width when the actual reference value is equal to or smaller than the ideal reference value.

In this way, the total movement range of the lens frame will not be narrowed when the electrical resistance of the shape memory alloy member is gradually changed by a predetermined width, and a problem wherein the focus point is not detected is prevented.

The temperature at which the deformation of the shape memory alloy member begins is generally set to be higher than the use temperature range in order to prevent malfunction. Therefore, the temperature of the shape memory alloy member when the electrical resistance reaches the maximum is at least higher than the outside air temperature.

Therefore, in the driving module of the invention, it is preferable that the maximum electrical resistance of the shape memory alloy member be measured and used as the actual reference value, and an ideal maximum electrical resistance of the shape memory alloy member be used as the ideal reference value.

In this way, when the actual reference value is measured, since the temperature of the shape memory alloy member is higher than the outside air temperature, the actual reference value is measured without being affected by the outside air temperature. Therefore, it is possible to calculate the correction ratio accurately regardless of the temperature environment and to improve the autofocus accuracy.

Moreover, in the driving module of the invention, it is preferable that the actual reference value is acquired by measuring the electrical resistance of the shape memory alloy member using the resistance detection means during a calibration operation before a focus detection operation.

In this way, it is not necessary to measure the electrical resistance of the shape memory alloy member in advance during manufacturing and to improve mass-productivity.

Moreover, in the driving module of the invention, the command value generation means may calculate the correction ratio based on the actual reference value which is measured in advance during manufacturing.

By measuring the actual reference value during manufacturing as described above, since it is possible to measure the actual reference value under a constant temperature environment, the fluctuation in the actual reference value due to a difference of the temperature environment is suppressed. Therefore, it is possible to calculate the correction ratio accurately regardless of the temperature environment and to improve the autofocus accuracy.

Moreover, an electronic device according to the invention includes the driving module described above.

In this electronic device, even when there is an error in the shape of the shape memory alloy member and the sensitivity fluctuates, since the variation width of the command value is corrected in accordance with the fluctuation, the autofocus accuracy of the electronic device increases.

Moreover, a method of controlling a driving module according to the invention is a method of controlling a driving module including: a support member; a lens frame provided so as to be movable back and forth in a certain direction in relation to the support member and hold the lens; a spring member that elastically holds the lens frame; driving means having a shape memory alloy member capable of being deformed through heating by supplying current thereto, for driving the lens frame while resisting a restoring force of the spring member when the shape memory alloy member is deformed by the supply of current; and control means for controlling the driving of the driving means by setting a command value for an electrical resistance of the shape memory alloy member so that the lens frame is moved intermittently and controlling the supply of current to the shape memory alloy member, the method including: changing the command value gradually by a predetermined variation width so that the electrical resistance of the shape memory alloy member increases or decreases gradually by a predetermined width when the lens frame is moved intermittently; performing a correction calculation which uses the ratio of an actual reference value of the electrical resistance of the shape memory alloy member to an ideal reference value of the electrical resistance of the shape memory alloy member as a correction ratio to calculate a correction variation width by multiplying the correction ratio by an ideal variation width of the command value; and changing the command value gradually using the correction variation width as the variation width.

In the method of controlling the driving module, even if there is an error in the shape of the shape memory alloy member and the sensitivity fluctuates, the variation width of the command value is corrected in accordance with the fluctuation. Therefore, the amount of deformation of the shape memory alloy member with respect to the command value becomes constant. Thus, when the electrical resistance of the shape memory alloy member is gradually changed by a predetermined width, the amount of deformation of the shape memory alloy member becomes constant.

According to the driving module, the electronic device, and the method of controlling the driving module according to the invention, it is possible to suppress a fluctuation in the movement width of the lens frame and to secure high autofocus accuracy even when there is an error in the shape of a shape memory alloy member and the sensitivity of the shape memory alloy member fluctuates.

Embodiments of the present invention will now be described by way of further example only and with reference to the accompanying drawings, in which:

Fig. 1 is a perspective view of a driving module according to an embodiment of the invention.
Fig. 2 is an exploded perspective view showing the configuration of the driving module according to the embodiment of the invention;
Fig. 3 is an exploded perspective view showing the configuration of a driving unit according to the embodiment of the invention;
Fig. 4 is a perspective view showing the driving unit according to the embodiment of the invention;
Fig. 5 is a cross-sectional view taken along the line A-A shown in Fig. 4;
Fig. 6 is a functional block diagram of the driving module according to the embodiment of the invention;
Fig. 7 is a flowchart diagram showing a method of controlling the driving module according to the embodiment of the invention;
Fig. 8 is a graph showing a driving mode of the driving module according to the embodiment of the invention;
Fig. 9 is a flowchart diagram showing a method of controlling the driving module according to a modified example of the embodiment of the invention;
Fig. 10 is a graph showing a driving mode of the driving module according to the modified example of the embodiment of the invention;
Figs. 11A and 11B are graphs showing the driving mode of the driving module according to the modified example of the embodiment of the invention;
Figs. 12A to 12C are cross-sectional views of an electronic device according to an embodiment of the invention, in which Fig. 12A is a perspective view of the front surface thereof, Fig. 12B is a perspective view of the rear surface thereof, and Fig. 12C is a cross-sectional view taken along the line F-F in Fig. 12B;
Fig. 13 is a graph showing the focus position of a lens;
Fig. 14 is a graph showing an electrical resistance with a change in the temperature of a shape memory alloy member;
Fig. 15 is a graph showing a driving mode of a driving module according to the related art; and
Fig. 16 is a graph showing a driving mode of a driving module according to the related art.

Hereinafter, embodiments of a driving module, an electronic device, and a method of controlling the driving module according to the invention will be described with reference to the drawings.

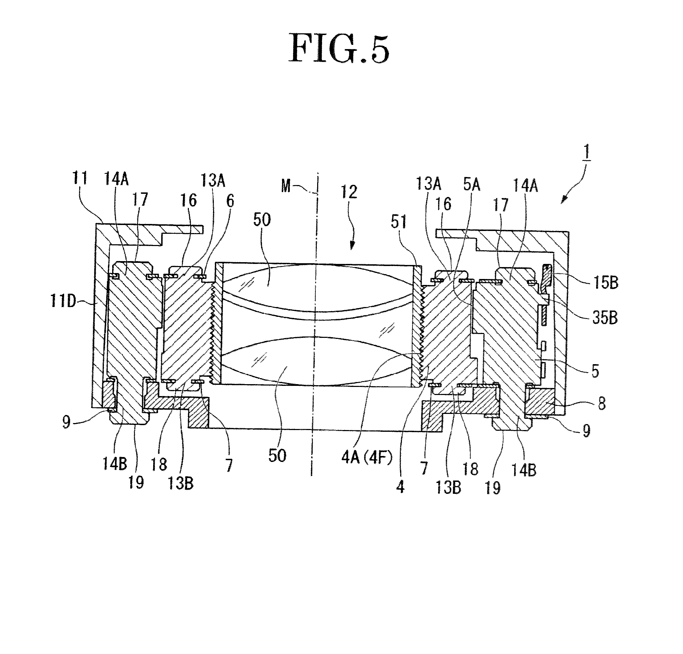

In the present embodiment, in some drawings, for better understanding of the drawings, illustrations of constituent members such as a lens unit 12 shown in Fig. 5 are appropriately omitted.

Moreover, symbol M in drawings is an imaginary axial line of a driving module 1 which is identical to the optical axis of a lens 50 shown in Fig. 5, and indicates a direction in which a lens frame 4 described later is driven. In the following description, the positions and directions of exploded respective components are sometimes referenced based on the positional relation with the axial line M during assembling. For example, even when the respective components have no definite circle or cylindrical surface, as long as there is no chance of misunderstanding, the direction extending along the axial line M will be sometimes referred to simply as an "axial direction," the direction orthogonal to the axial line M to simply as a "radial direction," and the direction revolving around the axial line M to simply as a "circumferential direction." Moreover, the side of the axial direction closer to a control substrate 32 will be referred to as a "lower side," and the opposite side will be referred to as an "upper side."

First, the configuration of the driving module 1 according to the present embodiment will be described.

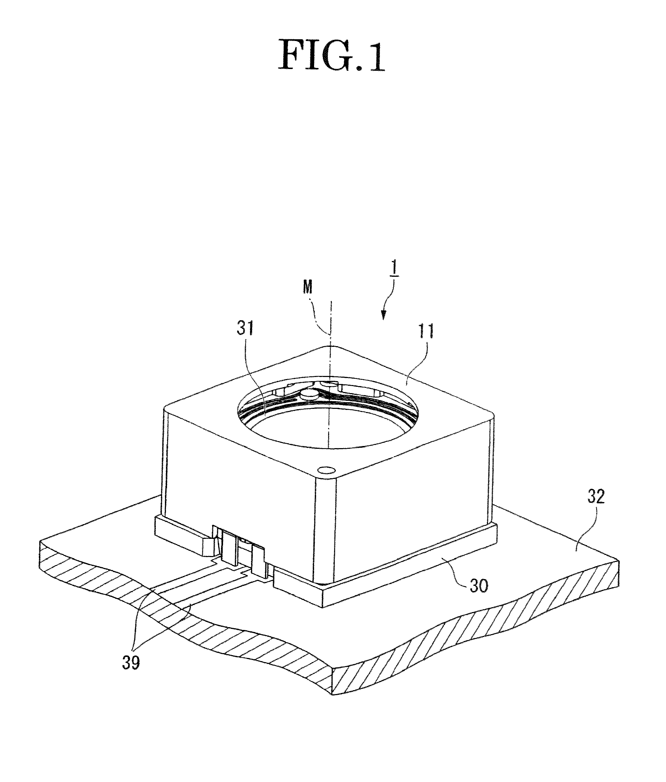

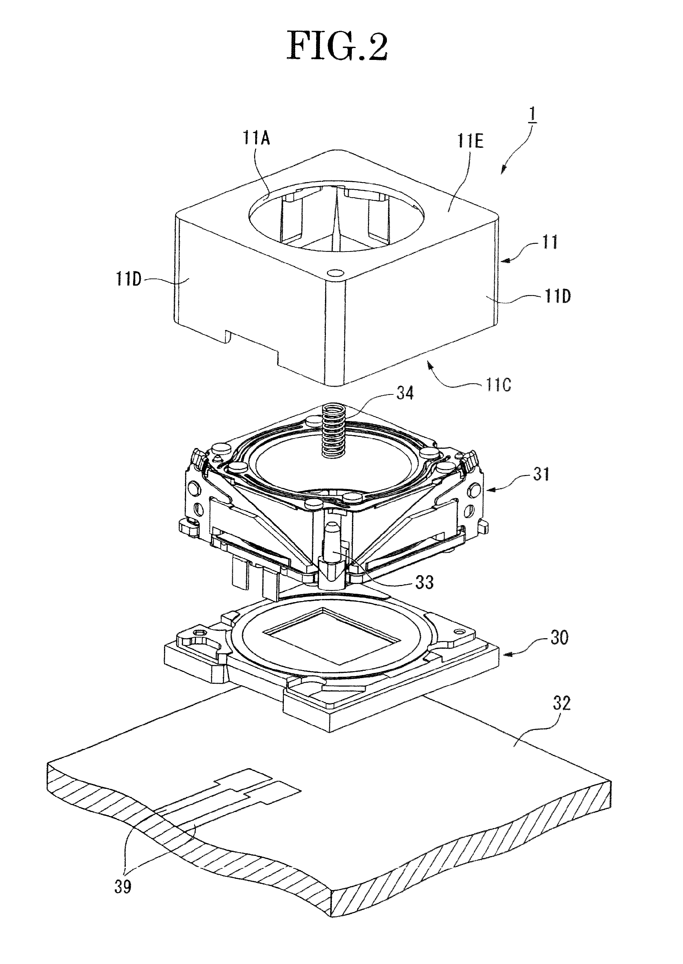

As shown in Figs. 1 and 2, the driving module 1 of the present embodiment is a driving module for moving a lens 12 (lens unit 12) shown in Fig. 5 back and forth in the axial direction and is mounted on an electronic device or the like. The driving module 1 includes a control substrate 32 serving as control means, the adapter 30 positioned on the control substrate 32, a driving unit 31 arranged on the adapter 30, and a cover 11 arranged so as to cover the driving unit 31.

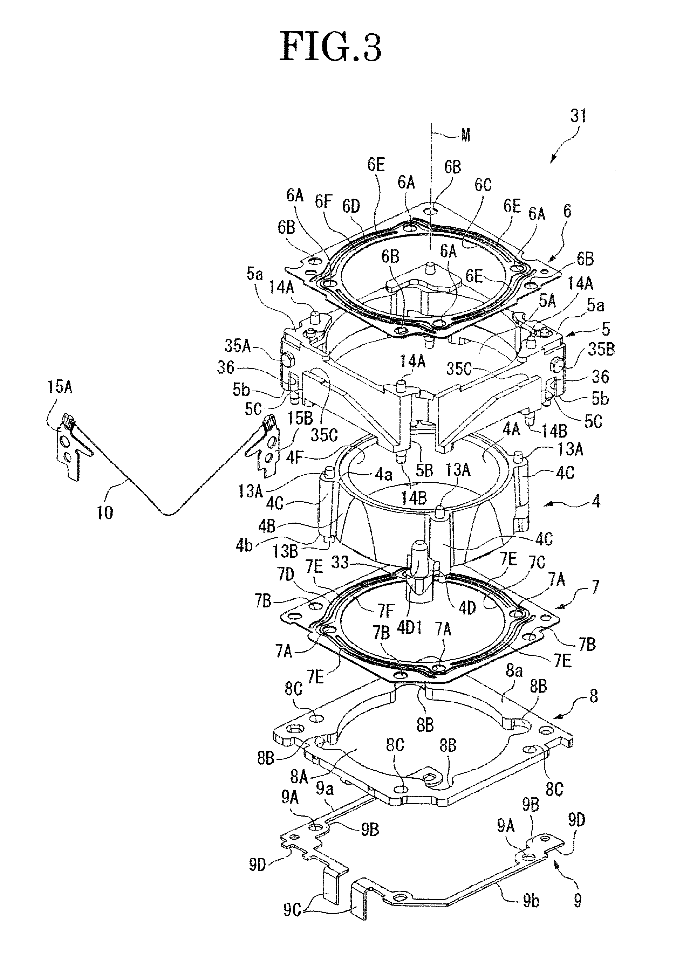

As shown in Fig. 3, the driving unit 31 is mainly configured to include a lens frame 4 serving as a driven member, a module frame 5 serving as a support member, an upper plate spring 6 and a lower plate spring 7 each serving as a spring member, a lower module plate 8, a power feeding member 9, a shape memory alloy (hereinafter shortly referred to as SMA) wire 10 serving as a shape memory alloy member. These respective components are assembled integrally to form one actuator.

As shown in Figs. 3 to 5, the lens frame 4 is inserted in the inner side of the module frame 5 so as to be movable in the axial direction. The upper plate spring 6 is arranged on the upper end portions of the lens frame 4 and the module frame 5. The lower plate spring 7 is arranged on the lower end portions of the lens frame 4 and the module frame 5. The lens frame 4 and the module frame 5 are interposed between the upper plate spring 6 and the lower plate spring 7. The upper plate spring 6 is fixed to the respective upper end portions of the lens frame 4 and the module frame 5 by swaging. Moreover, the lower module plate 8 is stacked under the lower plate spring 7, and the power feeding member 9 is further stacked under the lower module plate 8. The lower plate spring 7, the lower module plate 8, and the power feeding member 9 are fixed to the lower end portion of the module frame 5 by swaging, and the lower plate spring 7 is further fixed to the lower end portion of the lens frame 4 by swaging. Moreover, the cover 11 is placed and fixed to the upper surface of the lower module plate 8.

The lens frame 4 is an approximately circular cylindrical member which extends along the axial direction with the central axis line thereof identical to the axial line M. As shown in Fig. 5, a female thread is formed on an inner circumferential surface 4F of an accommodating portion 4A which penetrates in the axial direction and which has a circular shape in a cross-sectional view thereof. Moreover, the lens unit 12 is threadably mounted on the inner circumferential surface 4F of the accommodating portion 4A. In this way, the lens unit 12 is held by the lens frame 4. In addition, the lens unit 12 is configured to include a cylindrical barrel 51 in which a male thread is formed on an outer circumferential surface thereof and a lens 50 that is engaged at the inner side of the barrel 51.

Protrusions (convex portions) 4C which protrude toward the outer side of the radial direction at intervals of approximately 90 degrees in the circumferential direction are formed on the outer wall 4B of the lens frame 4 so as to extend in the axial direction. An upper fixing pin 13A and a lower fixing pin 13B are assembled on an upper end surface 4a and a lower end surface 4b of each of the respective protrusions 4C, respectively. The upper fixing pins 13A are configured to hold the upper plate spring 6, and the lower fixing pins 13B are configured to hold the lower plate spring 7.

Since the upper fixing pin 13A and the lower fixing pin 13B are disposed at the same axis position parallel to the axial line M, the insertion positions of the upper fixing pin 13A and the lower fixing pin 13B in the upper plate spring 6 and the lower plate spring 7 are the same.

In addition, the positions of the upper fixing pin 13A and the lower fixing pin 13B in a plan view thereof may be different. For example, the upper fixing pin 13A may be assembled on the upper end surface 4a of each of two protrusions 4C of the four protrusions 4C, and the lower fixing pin 13B may be assembled on the upper end surface 4a of each of the remaining two protrusions 4C.

Moreover, a guide projection 4D that catches the SMA wire 10 is formed on the lens frame 4. The guide projection 4D is integrally bonded to the outer circumferential surface of one lower end portion of the plurality of protrusions 4C, and a distal-end key portion (latching portion) 4D1 in which the SMA wire 10 is caught and latched is formed. The distal-end key portion 4D1 is configured to lift the lens frame 4 upward to be moved upward along the axial direction when the SMA wire 10 caught therein is contracted.

Moreover, a spring holding portion 33 that holds a coil spring 34 shown in Fig. 2 that biases the lens frame 4 downward is formed on the lens frame 4. The spring holding portion 33 is a columnar convex portion assembled on the upper end surface of the guide projection 4D, and the coil spring 34 shown in Fig. 2 is inserted through the spring holding portion 33. In this way, it is possible to suppress the occurrence of a movement wherein the SMA wire 10 is contracted by the effect of a surrounding environment or the like to lift the lens frame 4. The lens frame 4 is formed by integral molding using a thermoplastic resin which allows hot swaging or ultrasonic swaging, such as, for example, a polycarbonate (PC) resin and a liquid crystal polymer (LCP) resin.

The module frame 5 is a cylindrical member which extends along the axial direction with the central axis line thereof identical to the axial line M, and generally has an approximately rectangular outline in a plan view thereof. An accommodating portion 5A which penetrates in the axial direction and which has a circular shape in a cross-sectional view thereof is formed at the central portion thereof. Moreover, the lens frame 4 is accommodated in the accommodating portion 5A. Planar upper and lower end surfaces 5a and 5b formed along an imaginary vertical plane relative to the axial line M are formed at four upper and lower corners of the module frame 5, respectively. Moreover, an upper fixing pin 14A is formed on each upper end surface 5a so as to protrude upward, and a lower fixing pin 14B is formed on each lower end surface 5b so as to protrude downward.

The upper fixing pins 14A are configured to hold the upper plate spring 6, and the lower fixing pins 14B are configured to hold the lower plate spring 7, the lower module plate 8, and the power feeding member 9. Although the position of the upper fixing pin 14A in the plan view thereof may be different from the position of the lower fixing pin 14B, in the present embodiment, they are disposed at the same axis position parallel to the axial line M. Therefore, the insertion positions of the upper fixing pin 14A and the lower fixing pin 14B in the upper plate spring 6 and the lower plate spring 7 are the same. Moreover, the distance between the upper end surface 5a and the lower end surface 5b is set to be approximately the same as the distance between the upper end surface 4a and the lower end surface 4b of the lens frame 4.

A notch 5B in which a groove width in a plan view thereof has a size such that the notch 5B engages with the guide projection 4D of the lens frame 4 so as to be movable in the axial direction is formed on the lower side of one corner of the module frame 5. The notch 5B is configured such that when the lens frame 4 is inserted and accommodated in the module frame 5 from the lower side, the guide projection 4D of the lens frame 4 passes through the notch 5B, the distal-end key portion 4D1 of the guide projection 4D protrudes outside in the radial direction of the module frame 5, and the alignment of the lens frame 4 in the circumferential direction is realized.

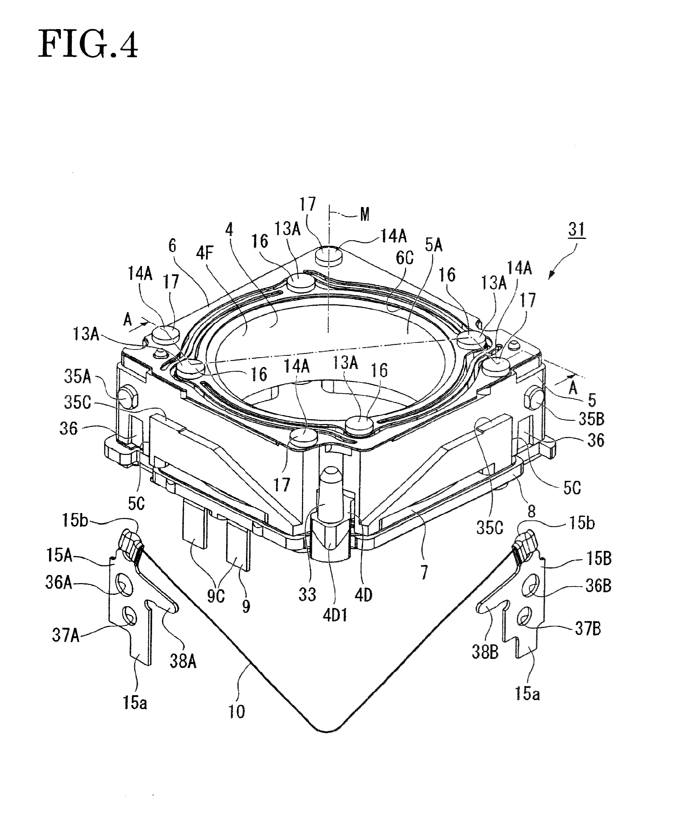

Moreover, as shown in Figs. 3 and 4, on two corners of the module frame 5 adjacent to the notch 5B, a pair of latching grooves 5C for attaching wire holding members (holding terminals) 15A and 15B that hold the SMA wire 10 is formed on the same side surface as the corner in which the notch 5B is formed.

Pins 35A and 35B are formed at the arrangement positions of the wire holding members 15A and 15B on the side surfaces of the module frame 5. Furthermore, a groove 36 in which an adhesive agent is filled so as to fix the module frame 5 and the wire holding members 15A and 15B is formed in a position on the lower side of a position where the pins 35A and 35B are formed. Moreover, a wall 35C which is capable of suppressing the wire holding members 15A and 15B from rotating when fixing the wire holding members 15A and 15B to the module frame 5 is formed. The wall 35C extends in a lateral direction (a direction perpendicular to the side surface) from the side surface of the module frame 5.

Similarly to the lens frame 4, in the present embodiment, the module frame 5 is formed by integral molding using a thermoplastic resin which allows hot swaging or ultrasonic swaging, such as, for example, a polycarbonate (PC) resin and a liquid crystal polymer (LCP) resin.

The wire holding member 15A is attached to a side surface in which a pair of terminal portions 9C of the power feeding member 9 protrudes from the driving module 1. The wire holding member 15B is attached to a side surface in which the pair of the terminal portions 9C of the power feeding member 9 does not protrude from the driving module 1.

As shown in Fig. 4, the wire holding members 15A and 15B are conductive members such as metal plates which are formed in a key-like shape by swaging the end of the SMA wire 10 to a wire holding portion 15b. Through holes 36A and 36B configured to engage with the pins 35A and 35B of the module frame 5 are formed in the wire holding members 15A and 15B, respectively. Moreover, through holes 37A and 37B to which an adhesive agent is supplied are formed on the lower side of the through holes 36A and 36B in the axial direction. Moreover, arm portions 38A and 38B for suppressing rotation of the wire holding members 15A and 15B, respectively, by making contact with the walls 35C of the module frame 5 when fixing the module frame 5 and the wire holding members 15A and 15B are formed. By allowing the arm portions 38A and 38B to engage with the latching grooves 5C and the pins 35A and 35B and make contact with the walls 35C, the ends of the SMA wire 10 are aligned and held.

The wire holding members 15A and 15B have a flake-shaped terminal portion 15a on the opposite side of the wire holding portion 15b (swaging position) of the SMA wire 10. In a state where the wire holding members 15A and 15B are attached to the module frame 5, the terminal portions 15a protrude slightly toward the lower side of the lower module plate 8 which is stacked under the module frame 5.

Moreover, the SMA wire 10 of which both ends are held by the pair of wire holding members 15A and 15B is latched from the lower side to the distal-end key portion 4D1 of the guide projection 4D of the lens frame 4 protruding through the notch 5B of the module frame. The lens frame 4 is biased upward through the distal-end key portion 4D1 by the tension of the SMA wire 10.

As shown in Figs. 3 and 4, the upper plate spring 6 and the lower plate spring 7 are stacked above and under the module frame 5 and the lens frame 4 inserted in the module frame 5, respectively. The upper plate spring 6 and the lower plate spring 7 are flat plate spring members which are punched approximately in the same shape and are formed of a metal plate such as, for example, stainless (SUS) steel.

The upper plate spring 6 (the lower plate spring 7) has approximately the same rectangular outline in a top view thereof, as the upper (lower) end portion of the module frame 5. A circular opening 6C (7C) which is slightly larger than the inner circumferential surface 4F of the lens frame 4 is formed at the central portion on the same axis as the axial line M. Generally, the upper plate spring 6 (the lower plate spring 7) has a ring shape.

Four through holes 6B (7B) through which the respective upper fixing pins 14A (the lower fixing pins 14B) can be inserted are formed near the corners of the upper plate spring 6 (the lower plate spring 7) so as to correspond to the arrangement positions of the upper fixing pins 14A (the lower fixing pins 14B) which are formed near the corners of the module frame 5. In this way, alignment with respect to the module frame 5 within a plane orthogonal to the axial line M can be realized.

Moreover, four through holes 6A (7A) through which the respective upper fixing pins 13A (the lower fixing pins 13B) can be inserted are formed on the upper plate spring 6 (the lower plate spring 7) so as to correspond to the arrangement positions of the upper fixing pins 13A (the lower fixing pins 13B) which are formed on the lens frame 4.

Moreover, a ring portion 6F (7F) is formed on the outer side in the radial direction of the opening 6C (7C), and four slits 6D (7D) extending approximately in a semicircular arc-like shape in the circumferential direction from positions near the through holes 6A (7A) facing each other in a diagonal direction with the axial line M disposed therebetween are formed in a state where approximately quadrant parts are superimposed on each other in the radial direction.

In this way, four spring portions 6E (7E) extended in a quadrant shape from a rectangular frame on the outer side of the upper plate spring 6 (the lower plate spring 7) are formed, and these spring portions individually serve as plate spring members which are extended to the vicinities of the through holes 6A (7A).

As described above, the upper plate spring 6 (the lower plate spring 7) has approximately the same rectangular outline as the outline of the module frame 5, and spring portions 6E (7E) and the ring portion 6F (7F) are formed in a ring-shaped region extending along the opening 6C (7C). Moreover, since the through holes 6B (7B) which are fixing portions are formed on a corner having a space margin in accordance with the arrangement of the upper fixing pins 14A (the lower fixing pins 14B) fixing the upper plate spring 6 (the lower plate spring 7) to the module frame 5, the shapes of the through holes 6B (7B) can be separated from the spring portions 6E (7E). Thus, the upper plate spring and the lower plate spring can easily be manufactured by a precise punching process and an etching process.

The lower module plate 8 is configured such that in a state where the respective lower fixing pins 14B of the module frame 5 are inserted into the through holes 7B of the lower plate spring 7, and the respective lower fixing pins 13B of the lens frame 4 accommodated in the module frame 5 are inserted into the through holes 7A of the lower plate spring, the lower plate spring 7 is stacked thereon to be interposed between the module frame 5 and the lower module plate 8 from the lower side thereof, so that the rectangular outer frame of the lower plate spring 7 is fixed thereto in a state of being pressed against the lower end surface 5b of the module frame 5.

The lower module plate 8 is a planar member having approximately the same rectangular outline as the module frame 5, and an approximately circular opening 8A having the center at the axial line M is formed at the central portion thereof so as to penetrate in the thickness direction. Moreover, on the side of an upper surface 8a which is stacked on the lower plate spring 7 during assembling, four U-shaped concave portions 8B for preventing interference with swaged portions described later are formed at positions corresponding to the arrangement positions of the lower fixing pins 13B of the lens frame 4. Moreover, through holes 8C through which the lower fixing pins 14B are inserted are formed on the respective corners positioned at the periphery of the lower module plate 8 so as to correspond to the arrangement positions of the respective lower fixing pins 14B of the module frame 5. As the material of the lower module plate 8, a synthetic resin having electrical insulating properties and light blocking properties is used, for example. Moreover, since the lower module plate 8 has electrical insulating properties, the lower module plate 8 serves as an insulation member that fixes the power feeding member 9 in a state of being electrically insulated from the lower plate spring 7.

The power feeding member 9 is configured to include a pair of electrodes 9a and 9b formed of a planar metal plate. The electrodes 9a and 9b are formed of a bent linear metal plate which includes an approximately L-shaped wiring portion 9B extending along the outline of the lower module plate 8 and a terminal portion 9C protruding toward the outer side of the outline of the lower module plate 8 from the end of the wiring portion. On each of the wiring portions 9B, two through holes 9A are formed such that among the lower fixing pins 14B of the module frame 5 protruding downward from the lower surface of the lower module plate 8, two lower fixing pins 14B adjacent along the outline of the lower module plate 8 are inserted through the through holes 9A, whereby the electrodes 9a and 9b are aligned with respect to the module frame 5.

Moreover, as shown in Fig. 4, the terminal portions 9C of the pair of electrodes 9a and 9b are formed so as to protrude downward in parallel from side surfaces of the module frame 5 to which the wire holding members 15A are attached.

Therefore, in one electrode 9a, a conductive connection portion 9D that is notched in a concave shape in order to electrically connect to the terminal portion 15a of the wire holding member 15A is formed on a side surface on the wiring portion 9B between the through hole 9A and the terminal portion 9C.

In contrast, in the other electrode 9b, a notched conductive connection portion 9D is formed on a side surface of the wiring portion 9B at a position where the side surface is connected to the terminal portion 15a of the wire holding member 15B. In the conductive connection portions 9D, the other electrode 9b is electrically connected to the wire holding member 15B.

Moreover, as means for electrically connecting the respective conductive connection portions 9D to the terminal portions 15a, soldering or adhesive bonding using a conductive adhesive agent can be used, for example.

As shown in Fig. 2, the cover 11 is a member in which lateral walls 11 D covering the module frame 5 so as to be externally engaged are extended toward the lower side from the outer edge of an upper surface 11E, and a rectangular opening 11 C is formed on the lower side. A circular opening 11 A of which the center is at the axial line M is formed at the central portion of the upper surface 11E. The opening 11A has a size such that the lens unit 12 can enter and exit therethrough.

As shown in Figs. 1 and 2, the control substrate 32 is control means for controlling the driving of the driving unit 31 by setting a command value for an electrical resistance of the SMA wire 10 and controlling the supply of current to the SMA wire 10 and is a substrate that supplies a control signal and power to the driving unit 31. The control substrate 32 schematically includes a printed substrate in which printed wirings 39 and 39 electrically connected to the respective terminal portions 9C of the pair of electrodes 9a and 9b are formed on a front surface thereof, and a control circuit (not shown) mounted on the printed substrate. Specifically, the control substrate 32 is control means for supplying current to the pair of electrodes 9a and 9b through the printed wirings 39 and 39 so as to appropriately expand and contract the SMA wire 10. The control substrate 32 is configured to expand and contract the SMA wire 10 to move the lens frame 4 in the axial direction relative to the module frame 5 so that the lens frame 4 is disposed at a desired position (in-focus position).

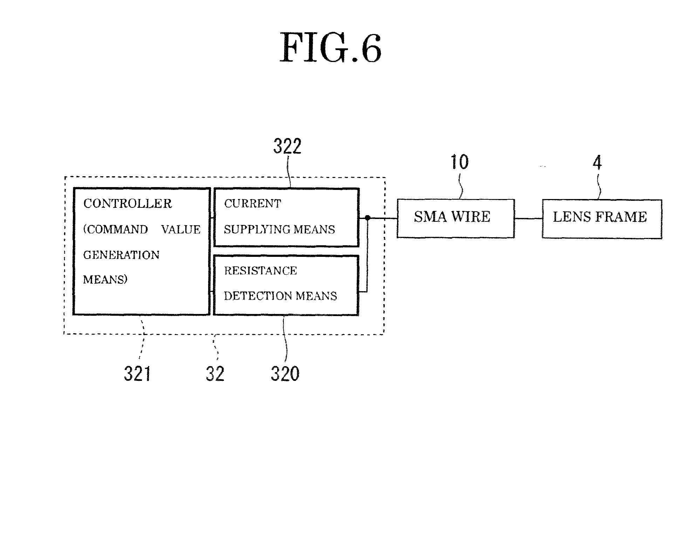

As shown in Fig. 6, the control substrate 32 includes resistance detection means 320 for detecting the electrical resistance of the SMA wire 10, command value generation means 321 for generating a command value $R_t$ for the control of the SMA wire 10, and current supplying means 322 for supplying current to the SMA wire 10 so that a detection value R detected by the resistance detection means 320 is identical to the command value $R_t$ generated by the command value generation means 321.

Next, a method of assembling the driving module 1 having the above-described configuration will be described in order.

In the first step, first, the lens frame 4 is inserted from the lower side into the accommodating portion 5A of the module frame 5 so that the upper end surface 5a of the module frame 5 is at the same height as the upper end surface 4a of the lens frame 4. Moreover, the respective upper fixing pins 14A of the module frame 5 and the respective upper fixing pins 13A of the lens frame 4 are inserted through the respective through holes 6B and 6A of the upper plate spring 6, respectively.

Subsequently, the distal ends of the respective upper fixing pins 13A and 14A protruding upward after having passing through the respective through holes 6A and 6B of the upper plate spring 6 are swaged by heater chips (not shown), whereby swaged portions 16 and swaged portions 17 which are first and second fixing portions are formed, respectively, as shown in Figs. 4 and 5.

In this case, swaging can be performed in a state where the upper end surface 4a of the lens frame 4 and the upper end surface 5a of the module frame 5 are arranged on the same plane, and the planar upper plate spring 6 is disposed without being deformed. Therefore, since it is not necessary to press the upper plate spring 6 that tends to deform, it is possible to perform the swaging operation easily. Moreover, it is possible to prevent the occurrence of floating or the like due to deformation of the upper plate spring 6.

Moreover, since the respective heater chips can be positioned at the same height, even when the swaged portions 16 and 17 are formed at the same time, it is possible to reduce fluctuation of swaging accuracy.

Subsequently, in the second step, the respective lower fixing pins 13B of the lens frame 4 are inserted through the respective through holes 7A of the lower plate spring 7. In this case, at the same time as above, the respective lower fixing pins 14B of the module frame 5 are inserted through the respective through holes 7B of the lower plate spring 7, the respective through holes 8C of the lower module plate 8, and the respective through holes 9A of the power feeding member 9. Subsequently, the distal ends of the respective lower fixing pins 13B protruding downward after having passing through the respective through holes 7A of the lower plate spring 7 are swaged by heater chips, whereby swaged portions 18 which are first fixing portions are formed as shown in Fig. 5.

In this case, since the distance in the axial line direction between the upper end surface 4a and the lower end surface 4b of the lens frame 4 is the same as the distance in the axial line direction between the upper end surface 5a and the lower end surface 5b of the module frame 5, swaging can be performed in a state where the lower end surfaces 4b and 5b are arranged on the same plane, and the lower module plate 8 is stacked without deforming the planar lower plate spring 7. Therefore, it is possible to prevent the occurrence of floating or the like due to deformation of the lower plate spring 7.

Moreover, since the respective heater chips can be positioned at the same height, even when the swaged portions 18 are formed at the same time, it is possible to reduce fluctuation of swaging accuracy.

Subsequently, in the third step, the lower end portions of the respective lower fixing pins 14B protruding downward after having passing through the through holes 7B, 8C, and 9A are swaged by heater chips, whereby swaged portions 19 which are second fixing portions are formed as shown in Fig. 5.

In this case, since the respective heater chips can be positioned at the same height, even when the swaged portions 19 are formed at the same time, it is possible to reduce fluctuation of swaging accuracy.

Moreover, since the concave portions 8B are formed on the lower module plate 8, the swaged portions 18 formed in the second step do not make contact with the lower module plate 8.

Through the first to third steps, it is possible to stack and fix the upper plate spring 6, the lower plate spring 7, the lower module plate 8, and the power feeding member 9 to both ends of the lens frame 4 and the module frame 5.

In addition, since the upper fixing pins 13A and the lower fixing pins 13B are formed at the same axis, and the upper fixing pins 14A and the lower fixing pins 14B are formed at the same axis, the heater chips for forming the swaged portions 16 and 18 and the swaged portions 17 and 19 during the swaging in the first to third steps are positioned at the same position on a plane. Therefore, since it is not necessary to change the positions of the heater chips during the respective swaging steps, it is possible to perform the swaging operation efficiently.

Subsequently, in the fourth step (arrangement step), the pair of wire holding members 15A and 15B to which the SMA wire 10 is attached are fixed to the module frame 5. Specifically, the two pins 35A and 35B formed on the module frame 5 are engaged with the through holes 36A and 36B of the wire holding members 15A and 15B, respectively, and the wire holding members 15A and 15B are latched to the latching grooves 5C. In this case, the intermediate portion of the SMA wire 10 is latched to the distal-end key portion 4D1 of the guide projection 4D and is caught and stretched so as to support the distal-end key portion 4D1 from the lower side. Moreover, the respective terminal portions 15a of the wire holding members 15A and 15B protrude toward the lower side of the lower module plate 8 and are latched to or disposed near the conductive connection portions 9D of the electrodes 9a and 9b of the power feeding member 9 which is fixed to the lower module plate 8.

Subsequently, in the fifth step (fixing step), a thermosetting adhesive agent is supplied to the through holes 37A and 37B so as to be filled in the grooves 36 of the module frame 5. When the thermosetting adhesive agent is filled into the grooves 36, the module frame 5 is inserted into a heating furnace in order to cure the adhesive agent. The adhesive agent is cured, for example, by heating at about 100°C for 20 to 30 minutes in the heating furnace, whereby the module frame 5 and the wire holding members 15A and 15B are attached and fixed together.

After attaching and fixing the module frame 5 to the wire holding members 15A and 15B, the respective terminal portions 15a are electrically connected to the conductive connection portions 9D using soldering, a conductive adhesive agent, and the like, for example.

Subsequently, in the sixth step, the cover 11 is put on the module frame 5 from above so as to bond the lateral walls 11 D and the lower module plate 8 together. For example, the lateral walls 11 D are bonded to the lower module plate 8 by squeezing by forming an engaging claw or the like on the lateral walls 11 D or by adhesive bonding or welding. Moreover, the swaged portions 16 and 17 are in the state of being separated from the rear surface of the upper surface 11 E of the cover 11.

In this way, the assembling of the main body of the driving module 1 is completed.

Subsequently, the adapter 30 is attached to the lower surface of the driving unit 31, and is then attached onto a substrate. The attachment of the driving module 1 to the substrate may be realized using fixing means such as adhesive bonding or squeezing. The substrate may be an independent member which is attached to the driving module 1 and may be a member which is connected to or disposed in an electronic device or the like.

Furthermore, the lens unit 12 is screwed and attached to the lens frame 4 through the opening 11 A of the cover 11. The reason why the lens unit 12 is attached at the last stage is to prevent contamination of the lens of the lens unit 12 and dust or the like from adhering thereto during the assembling operation. However, when the driving module 1 is shipped in the state of a product in which the lens unit 12 is attached, or when it is desired to make the opening 11A of the cover 11 smaller than the outline of the lens unit 12, for example, when the opening 11A also serves as an aperture diaphragm, this step may be performed in an earlier stage (before the sixth step).

Next, the operation of the driving module 1 described above will be described.

In the driving module 1, in a state where no power is supplied to the terminal portions 9C, the forces acting on the lens frame 4 such as the tension of the SMA wire 10, the biasing force of the coil spring 34, the restoring force of the upper plate spring 6 and the lower plate spring 7 at the swaged portions 16 and 18 are in equilibrium. Thus, the lens frame 4 to which the lens unit 12 is attached is held at a certain position in the axial direction.

When the driving module 1 described above is driven, power is supplied from the control substrate 32 to the power feeding member 9 through the terminal portions 9C in accordance with a control method described later. In this case, since the electrodes 9a, the wire holding members 15A, the SMA wire 10, the wire holding members 15B, and the electrodes 9b are electrically connected, current flows through the SMA wire 10.

Therefore, when current flows through the SMA wire 10, Joule heating occurs in the SMA wire 10, and the temperature of the SMA wire 10 increases. When the temperature exceeds the transformation start temperature of the SMA wire 10, the SMA wire 10 is contracted to a length corresponding to the temperature. As a result, the guide projection 4D of the lens frame 4 is moved upward. In this way, the coil spring 34, the upper plate spring 6, and the lower plate spring 7 are deformed, and an elastic restoring force corresponding to the amount of deformation acts on the lens frame 4. Moreover, the lens frame 4 stops at a position where the elastic restoring force is in equilibrium with the tension of the SMA wire 10. In this case, the upper plate spring 6 and the lower plate spring 7 form a parallel spring, the lens frame 4 moves exactly along the axial line M even when a guide member or the like for guiding it along the axial direction is not provided. Therefore, it is possible to decrease the number of components and realize miniaturization. Moreover, it is possible to realize low power consumption since there is no sliding load associated with a guide member.

On the other hand, when the supply of power is halted to stop supplying current to the SMA wire 10, the SMA wire 10 can be expanded, and the lens frame 4 is moved to an equilibrium position on the lower side.

In this way, by controlling the amount of supplied power using the control substrate 32, the lens frame 4 is driven along the axial line M direction.

Although the SMA wire 10 exhibits temperature hysterisis between heating and cooling, this can be dealt with through software-based correction.

Next, a method of controlling the driving module 1 will be described.

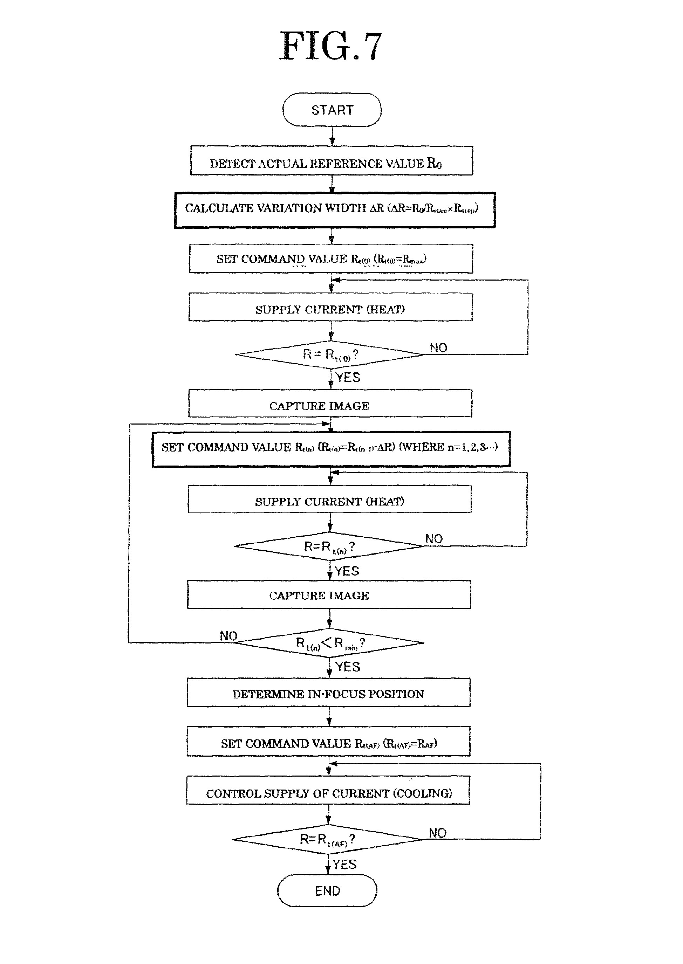

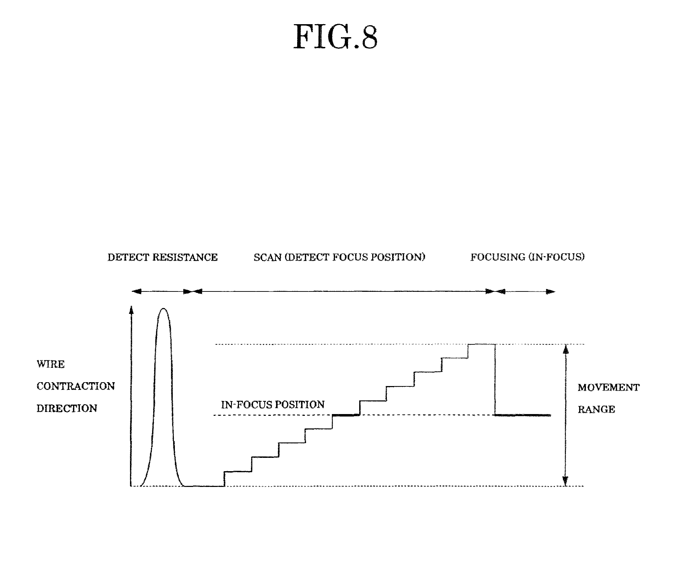

The driving module 1 having the above-described configuration can perform an autofocus operation by the control of the control substrate 32 in accordance with the method shown in Figs. 7 and 8.

First, as shown in Fig. 7, the electrical resistance (actual reference value $R_0$) of the SMA wire 10 is measured. Specifically, as shown in Fig. 8, a calibration operation is performed whenever an electronic device is turned on. That is, current is supplied to the SMAwire 10 so as to contract the SMAwire 10 up to its limit so that the lens frame 4 is moved to a maximum extent. Thereafter, the supply of current to the SMA wire 10 is halted to decrease the temperature of the SMA wire 10 so as to expand the SMA wire 10 so that the lens frame 4 returns to the original reference position (a reference position on the lower side). In this case, the maximum electrical resistance $R_{max}$ of the SMA wire 10 is detected by the resistance detection means 320 as the actual reference value $R_0$. Moreover, the minimum electrical resistance $R_{min}$ of the SMA wire 10 is detected by the resistance detection means 320. Then, an operation range (the expansion and contraction range of the SMA wire 10) of the driving module 1 is detected based on the minimum electrical resistance $R_{min}$ and the maximum electrical resistance $R_{max}$.

Subsequently, the electrical resistance of the SMA wire 10 is gradually decreased by a predetermined width, whereby the lens frame 4 is moved over a total movement range so as to detect a focus point. In this case, the command value generation means 321 generates a command value $R_t$, and the current supplying means 322 supplies current to the SMAwire 10 based on the command value $R_t$ while the resistance detection means 320 feeds back the detection value R of the SMA wire 10.

Specifically, first, the command value generation means 321 calculates a variation width $\Delta R$ of the electrical resistance of the SMA wire 10 for moving the lens frame 4 intermittently by a predetermined width in accordance with the actual reference value $R_0$, an ideal reference value $R_{stan}$ of the electrical resistance of the SMAwire 10, and an ideal variation width $R_{step}$ of the command value $R_t$. Specifically, the command value generation means 321 performs a correction calculation which uses the ratio of the actual reference value $R_0$ to the ideal reference value $R_{stan}$ as a correction ratio ($R_0/R_{stan}$) to calculate a correction variation width ($R_0/R_{stan} \times R_{step}$) by multiplying the correction ratio by the ideal variation width $R_{step}$.

The actual reference value $R_0$ is the maximum electrical resistance $R_{max}$ of the SMA wire 10 detected by the resistance detection means 320 as described above.

Moreover, the ideal reference value $R_{stan}$ described above is the ideal maximum electrical resistance of the SMA wire 10 and the maximum electrical resistance at the center of a line diameter fluctuation. That is, the ideal reference value $R_{stan}$ is the maximum electrical resistance which is calculated theoretically or experimentally for an ideally shaped SMA wire with no error in its line diameter. For example, when the line diameter of the SMA wire 10 is 25 $\mu$m, the ideal reference value $R_{stan}$ is the maximum electrical resistance of a SMA wire of which the line diameter is exactly 25 $\mu$m.

Moreover, the ideal variation width $R_{step}$ described above is an ideal variation width of the electrical resistance of the SMA wire 10 when the lens frame 4 is moved intermittently by a predetermined width and is the variation width of the electrical resistance per one step, determined by the property at the center of a line diameter. That is, the ideal variation width $R_{step}$ is the variation width of the electrical resistance which is calculated theoretically or experimentally for an ideally shaped SMA wire with no error in its line diameter. For example, when the line diameter of the SMA wire 10 is 25 $\mu$m, the ideal variation width $R_{step}$ is the variation width of the electrical resistance per one step when the lens frame 4 is moved intermittently by a predetermined width using a SMA wire of which the line diameter is exactly 25 $\mu$m.

Subsequently, the command value generation means 321 sets an initial command value $R_{t(0)}$. Specifically, the maximum electrical resistance $R_{max}$ described above is set as the initial command value $R_{t0}$. Subsequently, the current supplying means 322 supplies current to the SMA wire 10 so that the detection value R detected by the resistance detection means 320 is identical to the command value $R_{t(0)}$. Moreover, an image is captured and stored at the point in time when the detection value R detected by the resistance detection means 320 is identical to the command value $R_{t(0)}$ (the maximum electrical resistance $R_{max}$). In this way, an image in a state where the lens frame 4 is positioned at a reference position is acquired.

Subsequently, the command value generation means 321 gradually decreases the command value $R_{t(n)}$ by a predetermined variation width $\Delta R$ so as to move the lens frame 4 intermittently by a predetermined width. Specifically, first, the command value generation means 321 sets the command value $R_{t(1)}$. A value ($R_{t(0)}-\Delta R$) which is a subtraction of a variation width $\Delta R$ (=$R_0/R_{stan} \times R_{step}$) from the initial command value $R_{t(0)}$ (the maximum electrical resistance $R_{max}$) described above is set as the command value $R_{t(1)}$. In addition, the correction variation width ($R_0/R_{stan} \times R_{step}$) described above is used as the variation width $\Delta R$. Subsequently, the current supplying means 322 supplies current (heat) to the SMA wire 10 so that the detection value R detected by the resistance detection means 320 is identical to the command value $R_{t(1)}$. Moreover, an image is captured and stored at the point in time when the detection value R detected by the resistance detection means 320 is identical to the command value $R_{t(1)}$ ($R_{t(0)}-\Delta R$). After that, the command value generation means 321 sets a value which is a subtraction of the variation width $\Delta R$ from the previous command value

$R_{t(1)}$ ($R_{t(0)}$-$\Delta$R) as the command value $R_{t(2)}$. The current supplying means 322 supplies current (heat) to the SMA wire 10 so that the detection value R detected by the resistance detection means 320 is identical to the command value $R_{t(2)}$. An image is captured and stored at the point in time when the detection value R detected by the resistance detection means 320 is identical to the command value $R_{t(2)}$ ($R_{t(0)}$-2$\Delta$R). These processes are repeated. That is, the command value generation means 321 sets a value ($R_{t(0)}$-n-$\Delta$R) which is a subtraction of the variation width $\Delta$R from the previous command value $R_{t(n-1)}$ as the command value $R_{t(n)}$. The current supplying means 322 supplies current (heat) to the SMA wire 10 so that the detection value R detected by the resistance detection means 320 is identical to the command value $R_{t(n)}$. An image is captured and stored at the point in time when the detection value R detected by the resistance detection means 320 is identical to the command value $R_{t(n)}$ ($R_{t(0)}$-n$\Delta$R). These processes are repeated until the command value $R_{t(n)}$ reaches the minimum electrical resistance $R_{min}$.

Subsequently, after an image is captured and stored in accordance with the last command value $R_{t(n)}$, a focus point is detected based on the entirety of the stored images so as to determine an in-focus position.

Moreover, the command value generation means 321 sets the electrical resistance $R_{AF}$ at the in-focus position as the command value $R_{t(AF)}$. The current supplying means 322 controls (cool) the amount of current supplied to the SMA wire 10 so that the detection value R detected by the resistance detection means 320 is identical to the command value $R_{t(AF)}$. The detection value R detected by the resistance detection means 320 is made identical to the command value $R_{t(AF)}$ ($R_{AF}$), whereby the autofocus operation is completed.

In the driving module 1 described above, the correction variation width ($R_0$/$R_{stan}$×$R_{step}$) is calculated by multiplying the ratio (correction ratio) of the actual reference value $R_0$ to the ideal reference value $R_{stan}$ by the ideal variation width $R_{step}$, and the command value $R_{t(n)}$ is calculated and set using the correction variation width as the variation width $\Delta$R. Therefore, even if there is an error in the line diameter of the SMA wire 10 and the sensitivity fluctuates, the variation width $\Delta$R is corrected in accordance with the fluctuation. For example, when the fluctuation in the sensitivity of the SMA wire 10 is large due to an error in the line diameter, the variation width $\Delta$R of the command value $R_{t(n)}$ is corrected so as to be decreased accordingly. In contrast, when the fluctuation in the sensitivity of the SMA wire 10 is small, the variation width $\Delta$R of the command value $R_{t(n)}$ is corrected so as to be increased accordingly. In this way, even when there is an error in the line diameter of the SMA wire 10, the fluctuation in the amount of deformation of the SMA wire 10 with respect to the command value $R_{t(n)}$ is suppressed. Therefore, when the electrical resistance of the SMA wire 10 is gradually changed by a predetermined width, since the lens frame 4 moves intermittently by a predetermined width, it is possible to secure high autofocus accuracy.

Moreover, in the driving module 1 described above, the maximum electrical resistance $R_{max}$ of the SMA wire 10 is used as the actual reference value $R_0$. However, since the temperature of the SMA wire 10 at the maximum electrical resistance $R_{max}$ is higher than an outside air temperature, which is about 70 to 80°C, for example, it is possible to measure the actual reference value $R_0$ of the SMA wire 10 without being affected greatly by the outside air temperature. Therefore, it is possible to calculate the correction ratio which rarely changes with a temperature environment and to improve the autofocus accuracy.

Moreover, in the driving module 1 described above, the resistance detection means 320 measures the electrical resistance of the SMA wire 10 during a calibration operation and acquires the actual reference value $R_0$. Therefore, it is not necessary to measure the electrical resistance of the SMA wire 10 of each of the individual modules in advance during the manufacturing. Accordingly, it is possible to improve the mass-productivity of the driving module 1.

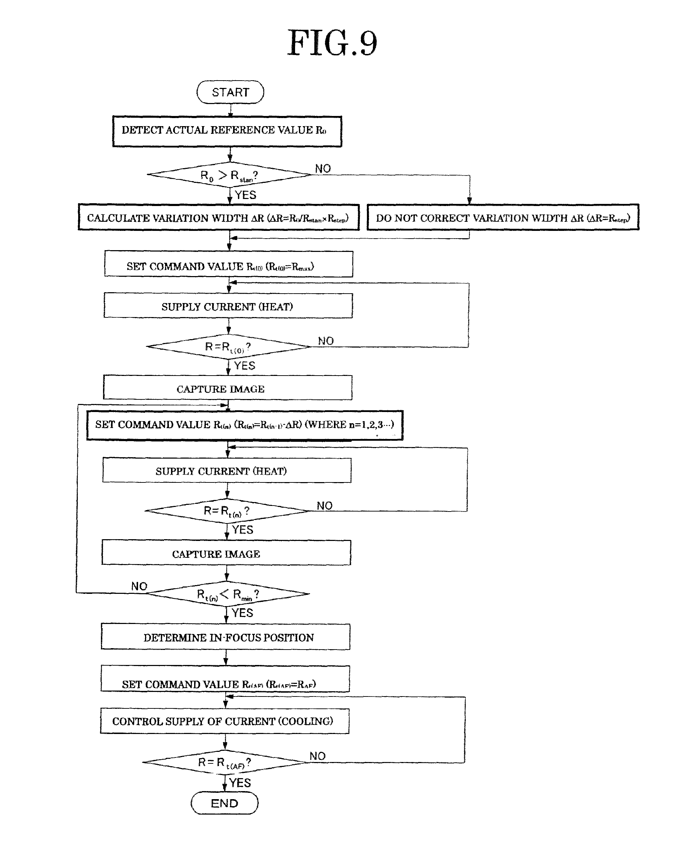

In addition, when the command value generation means 321 changes gradually the command value $R_{t(n)}$, as shown in Fig. 9, the variation width $\Delta$R may be corrected only when the actual reference value $R_0$ is greater than the ideal reference value $R_{stan}$. That is, when the actual reference value $R_0$ is greater than the ideal reference value $R_{stan}$, the command value $R_{t(n)}$ is gradually changed using the correction variation width ($R_0$/$R_{stan}$x$R_{step}$) as the variation width $\Delta$R. When the actual reference value $R_0$ is equal to or smaller than the ideal reference value $R_{stan}$, the command value $R_{t(n)}$ is gradually changed using the ideal variation width $R_{step}$ as the variation width $\Delta$R.

In this way, when the electrical resistance of the SMA wire 10 is gradually changed by a predetermined width, the total movement range of the lens frame 4 is not narrowed, and a problem wherein no focus point is detected will not occur. As a result, it is possible to secure high autofocus accuracy.

Moreover, the command value generation means 321 may calculate the correction ratio ($R_0$/$R_{stan}$) based on the actual reference value $R_0$ which is measured in advance during manufacturing.

By measuring the actual reference value $R_0$ during manufacturing as described above, it is possible to measure the actual reference value $R_0$ under a certain temperature environment. Thus, the fluctuation of the actual reference value $R_0$ due to a difference of the temperature environment is suppressed. Therefore, it is possible to calculate the correction ratio accurately regardless of the temperature environment and to improve the autofocus accuracy.

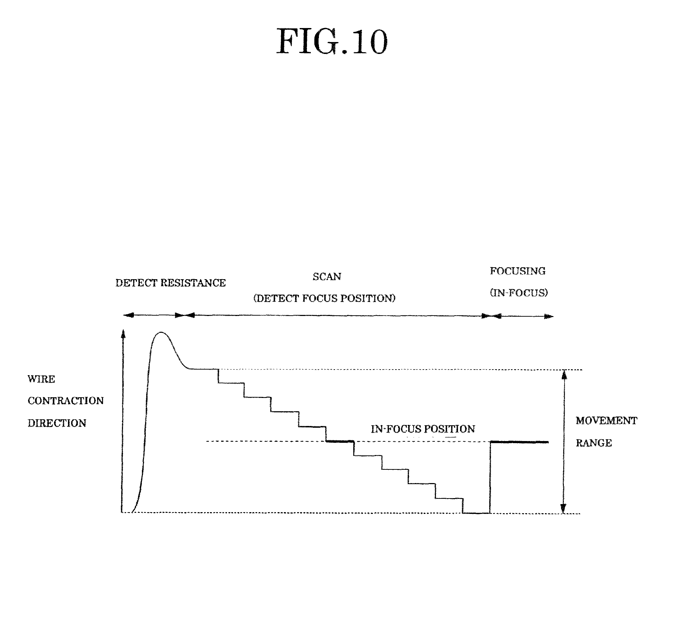

Moreover, the autofocus operation in the driving module 1 described above is performed by decreasing the electrical resistance of the SMA wire 10 gradually to move the lens frame 4 over the total movement range to detect a focus point and then increasing the electrical resistance of the SMA wire 10 to move the lens frame 4 to an in-focus position. However, as shown in Fig. 10, the autofocus operation may be performed by increasing the electrical resistance of the SMAwire 10 gradually to move the lens frame 4 over the total movement range to detect a focus point and then decreasing the electrical resistance of the SMA wire 10 to move the lens frame 4 to an in-focus position.

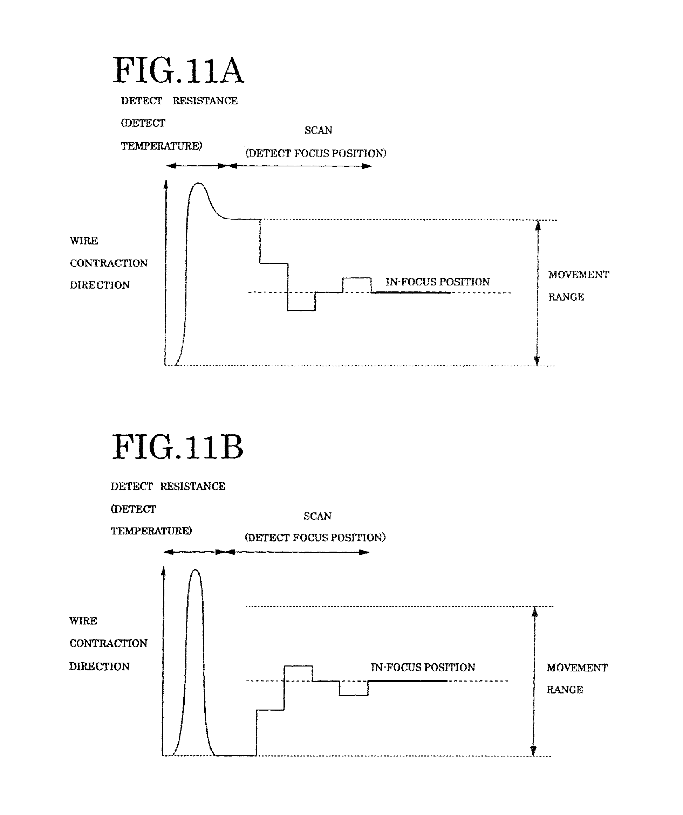

In addition, as shown in Figs. 11A and 11B, the autofocus operation may be performed by supplying current to the SMA wire 10 to gradually decrease or increase the electrical resistance of the SMA wire 10 to move the lens frame 4 to detect a focus point, and finely adjusting the position of the lens frame 4 after the focus point is detected to move the lens frame 4 to an in-focus position while increasing or decreasing the electrical resistance of the SMA wire 10 in accordance with a hill climbing method.

Next, an electronic device according to an embodiment of the invention will be described.

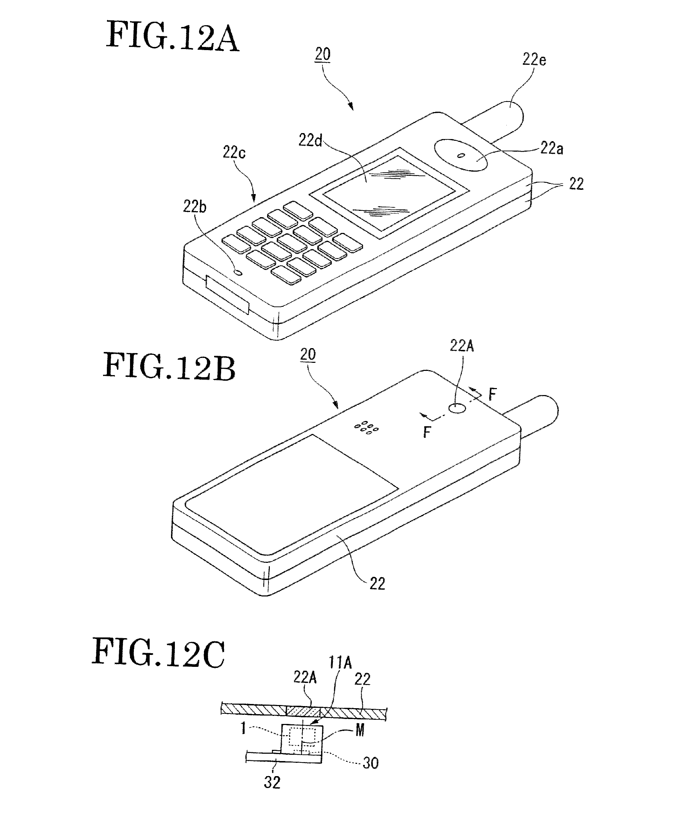

Figs. 12A and 12B are external perspective views of the front and rear surfaces of the electronic device according to the embodiment of the invention. Fig. 12C is a cross-sectional view taken along the line F-F in Fig. 12B.

A mobile camera phone 20 of the present embodiment shown in Figs. 12A and 12B is an example of an electronic device having the driving module 1 of the above-described embodiment.

The mobile camera phone 20 includes an ear piece 22a, a mouth piece 22b, an operation section 22c, a liquid crystal display section 22d, an antenna section 22e, and a well-known constituent element of a mobile phone such as a control circuit section (not shown), which are provided on the inside and the outside of a cover 22.

As shown in Fig. 12B, a window 22A through which outside light passes is formed on the rear surface side of the cover 22 where the liquid crystal display section 22d is provided. Moreover, as shown in Fig. 12C, the driving module 1 is provided so that the opening 11 A of the driving module 1 faces the window 22A of the cover 22 and the axial line M extends along the normal direction of the window 22A.

According to such a configuration, the scanning intervals become constant, and an autofocus operation can be performed with high accuracy. Moreover, since the number of steps needed for obtaining a necessary amount of movement is constant, it is possible to provide a high-performance mobile camera phone 20 in which the time up to the end of autofocusing can be shortened.

While the embodiments of the driving module, the electronic device, and the method of controlling the driving module according to the invention have been described hereinabove, the invention is not limited to the embodiments above.

For example, in the present embodiment, a case in which the upper fixing pins 13A and 14A and the lower fixing pins 13B and 14B are inserted through the upper plate spring 6 and the lower plate spring 7 which are plate spring members for biasing the lens frame 4, and the distal ends of the fixing pins are swaged has been described. However, the method of fixing the plate spring members is not limited to this. For example, the plate spring members may be fixed by ultrasonic swaging or the like and may be adhesively bonded to the lens frame 4 and the module frame 5. According to this structure, since a large attachment area can be secure, it is possible to obtain a large strength even when an adhesive agent is used. In addition, the spring member in the invention is not limited to a plate spring but may be a spring member having other shape.

Moreover, in the above description, although the module frame 5 has been described as an approximately rectangular member, the shape of the module frame 5 is not limited to the approximately rectangular shape and may be a polygonal shape.

Moreover, in the above description, although the SMA wire 10 is provided as the shape memory alloy member, the shape memory alloy member in the invention is not limited to a wire-shaped shape memory alloy member, and for example, may be a shape memory alloy member having other shape such as a planar shape.

Moreover, in the above description, although the mobile camera phone has been described as an example of the electronic device which uses the driving module, the type of the electronic device is not limited to this. For example, the driving module may be used in other optical devices such as a digital camera or a camera built into a PC.

In addition, within a range not deviating from the object of the invention, constituent elements of the above-described embodiments may be appropriately substituted with well-known constituent elements, and the above-described modified examples may be appropriately combined.


**Claims**

1.   A driving module (1) comprising:

   a support member (5);
   a lens frame (4) provided so as to be movable back and forth in a certain direction in relation to the support member (5) and hold the lens (12);
   a spring member (6, 7) that elastically holds the lens frame (4);
   driving means having a shape memory alloy member (10) capable of being deformed through heating by supplying current thereto, for driving the lens frame (4) while resisting a restoring force of the spring member (6, 7) when the shape memory alloy member (10) is deformed by the supply of current; and
control means (32) for controlling the driving of the driving means by setting a command value for an electrical resistance of the shape memory alloy member (10) so that the lens frame (4) is moved intermittently and controlling the supply of current to the shape memory alloy member (10),
wherein the control means (32) includes
resistance detection means (320) for detecting the electrical resistance of the shape memory alloy member (10),
command value generation means (321) for generating the command value,
and
current supplying means (322) for supplying current to the shape memory alloy member (10) so that a detection value detected by the resistance detection means is identical to the command value generated by the command value generation means, and
wherein the command value generation means changes the command value gradually by a predetermined variation width so that the electrical resistance of the shape memory alloy member (10) increases or decreases gradually by a predetermined width when the lens frame (4) is moved intermittently, and
performs a correction calculation which uses the ratio of an actual reference value of the electrical resistance of the shape memory alloy member (10) to an ideal reference value of the electrical resistance of the shape memory alloy member (10) as a correction ratio to calculate a correction variation width by multiplying the correction ratio by an ideal variation width of the command value, to thereby change the command value gradually using the correction variation width as the variation width.

2. The driving module (1) according to claim 1,
wherein the command value generation means changes the command value gradually using the correction variation width as the variation width when the actual reference value is greater than the ideal reference value and changes the command value gradually using the ideal variation width as the variation width when the actual reference value is equal to or smaller than the ideal reference value.

3. The driving module (1) according to claim 1 or claim 2,
wherein the maximum electrical resistance of the shape memory alloy member (10) is measured and used as the actual reference value, and an ideal maximum electrical resistance of the shape memory alloy member (10) is used as the ideal reference value.

4. The driving module (1) according to any of claims 1 to 3,
wherein the actual reference value is acquired by measuring the electrical resistance of the shape memory alloy member (10) using the resistance detection means during a calibration operation before a focus detection operation.

5. The driving module (1) according to any of claims 1 to 3,
wherein the command value generation means calculates the correction ratio based on the actual reference value which is measured in advance during manufacturing.

6. An electronic device comprising the driving module (1) according to any one of claims 1 to 5.

7. A method of controlling a driving module (1) comprising:

a support member (5);
a lens frame (4) provided so as to be movable back and forth in a certain direction in relation to the support member (5) and hold the lens;
a spring member (6, 7) that elastically holds the lens frame (4);
driving means having a shape memory alloy member (10) capable of being deformed through heating by supplying current thereto, for driving the lens frame (4) while resisting a restoring force of the spring member (6, 7) when the shape memory alloy member (10) is deformed by the supply of current; and
control means (32) for controlling the driving of the driving means by setting a command value for an electrical resistance of the shape memory alloy member (10) so that the lens frame (4) is moved intermittently and controlling the supply of current to the shape memory alloy member (10), the method comprising:

changing the command value gradually by a predetermined variation width so that the electrical resistance of the shape memory alloy member (10) increases or decreases gradually by a predetermined width when the lens frame (4) is moved intermittently;
performing a correction calculation which uses the ratio of an actual reference value of the electrical resistance of the shape memory alloy member (10) to an ideal reference value of the electrical resistance of the shape memory alloy member (10) as a correction ratio to calculate a correction variation width by multiplying the correction ratio by an ideal variation width of the command value; and
changing the command value gradually using the correction variation width as the variation width.

# FIG.1

# FIG.2

# FIG.3

# FIG.4

# FIG.5

# FIG.6

CONTROLLER (COMMAND VALUE GENERATION MEANS)

CURRENT SUPPLYING MEANS

RESISTANCE DETECTION MEANS

SMA WIRE

LENS FRAME

322 10 4 321 32 320

# FIG.7

START

↓

DETECT ACTUAL REFERENCE VALUE $R_0$

↓

CALCULATE VARIATION WIDTH $\Delta R$ ($\Delta R = R_0/R_{stan} \times R_{step}$)

↓

SET COMMAND VALUE $R_{t(0)}$ ($R_{t(0)} = R_{max}$)

↓

SUPPLY CURRENT (HEAT)

↓

$R = R_{t(0)}$ ?  →NO

↓YES

CAPTURE IMAGE

↓

SET COMMAND VALUE $R_{t(n)}$ ($R_{t(n)} = R_{t(n-1)} - \Delta R$) (WHERE n=1,2,3···)

↓

SUPPLY CURRENT (HEAT)

↓

$R = R_{t(n)}$ ?  →NO

↓YES

CAPTURE IMAGE

↓

NO←  $R_{t(n)} < R_{min}$ ?

↓YES

DETERMINE IN-FOCUS POSITION

↓

SET COMMAND VALUE $R_{t(AF)}$ ($R_{t(AF)} = R_{AF}$)

↓

CONTROL SUPPLY OF CURRENT (COOLING)

↓

$R = R_{t(AF)}$ ?  →NO

↓YES

END

# FIG.8

DETECT RESISTANCE          SCAN (DETECT FOCUS POSITION)          FOCUSING (IN-FOCUS)

WIRE
CONTRACTION
DIRECTION

IN-FOCUS POSITION

MOVEMENT
RANGE

# FIG.9

```
                        ( START )
                            │
                            ▼
        ┌───────────────────────────────────────┐
        │  DETECT ACTUAL REFERENCE VALUE R₀      │
        └───────────────────────────────────────┘
                            │
                            ▼
                    ╱─────────────╲              NO
                   ╱  R₀ > R_stan ? ╲──────────────────┐
                    ╲─────────────╱                    │
                         │ YES                         │
                         ▼                             ▼
┌──────────────────────────────────────────┐  ┌─────────────────────────────────────────────┐
│ CALCULATE VARIATION WIDTH ΔR              │  │ DO NOT CORRECT VARIATION WIDTH ΔR           │
│ (ΔR=R₀/R_stan×R_step)                     │  │ (ΔR=R_step)                                 │
└──────────────────────────────────────────┘  └─────────────────────────────────────────────┘
                         │                             │
                         ▼                             │
        ┌──────────────────────────────────────┐      │
        │ SET COMMAND VALUE R_t(0) (R_t(0)=R_max)│      │
        └──────────────────────────────────────┘      │
                         │◄─────────────────────────────┘
                         ▼
        ┌──────────────────────────────────────┐
        │        SUPPLY CURRENT (HEAT)          │
        └──────────────────────────────────────┘
                         │
                         ▼
                    ╱─────────────╲       NO
                   ╱  R = R_t(0) ?  ╲──────────┐
                    ╲─────────────╱            │
                         │ YES                 │
                         ▼                     │
        ┌──────────────────────────────────────┐
        │           CAPTURE IMAGE               │
        └──────────────────────────────────────┘
                         │◄────────────────────────────────┐
                         ▼                                  │
┌──────────────────────────────────────────────────────┐  │
│ SET COMMAND VALUE R_t(n) (R_t(n)=R_t(n-1)-ΔR)         │  │
│ (WHERE n=1,2,3···)                                     │  │
└──────────────────────────────────────────────────────┘  │
                         │                                  │
                         ▼                                  │
        ┌──────────────────────────────────────┐           │
        │        SUPPLY CURRENT (HEAT)          │           │
        └──────────────────────────────────────┘           │
                         │                                  │
                         ▼                                  │
                    ╱─────────────╲       NO                │
                   ╱  R = R_t(n) ?  ╲──────────┐            │
                    ╲─────────────╱            │            │
                         │ YES                 │            │
                         ▼                     │            │
        ┌──────────────────────────────────────┐           │
        │           CAPTURE IMAGE               │           │
        └──────────────────────────────────────┘           │
              NO         │                                  │
          ┌──────── ╱─────────────╲                         │
          │        ╱  R_t(n) < R_min ?╲                      │
          └───────► ╲─────────────╱ ──────────────────────┘
                         │ YES
                         ▼
        ┌──────────────────────────────────────┐
        │      DETERMINE IN-FOCUS POSITION      │
        └──────────────────────────────────────┘
                         │
                         ▼
        ┌──────────────────────────────────────┐
        │ SET COMMAND VALUE R_t(AF) (R_t(AF)=R_AF)│
        └──────────────────────────────────────┘
                         │◄─────────────────────┐
                         ▼                       │
        ┌──────────────────────────────────────┐│
        │   CONTROL SUPPLY OF CURRENT (COOLING)  ││
        └──────────────────────────────────────┘│
                         │                       │
                         ▼                       │
                    ╱─────────────╲       NO     │
                   ╱  R = R_t(AF) ? ╲─────────────┘
                    ╲─────────────╱
                         │ YES
                         ▼
                      ( END )
```

$R_0 > R_{stan}$?

$\Delta R = R_0/R_{stan} \times R_{step}$

$\Delta R = R_{step}$

$R_{t(0)}$ ($R_{t(0)} = R_{max}$)

$R = R_{t(0)}$?

$R_{t(n)}$ ($R_{t(n)} = R_{t(n-1)} - \Delta R$) (WHERE n = 1,2,3···)

$R = R_{t(n)}$?

$R_{t(n)} < R_{min}$?

$R_{t(AF)}$ ($R_{t(AF)} = R_{AF}$)

$R = R_{t(AF)}$?

# FIG.10

# FIG.11A

DETECT  RESISTANCE

(DETECT

TEMPERATURE)

SCAN

(DETECT FOCUS POSITION)

WIRE

CONTRACTION

DIRECTION

IN-FOCUS POSITION

MOVEMENT

RANGE

# FIG.11B

DETECT  RESISTANCE

(DETECT

TEMPERATURE)

SCAN

(DETECT FOCUS POSITION)

WIRE

CONTRACTION

DIRECTION

IN-FOCUS POSITION

MOVEMENT

RANGE

26

# FIG.12A

# FIG.12B

# FIG.12C

# FIG.13

IN-FOCUS POSITION

HARMONIC
COMPONENT

0
DISTANCE
$\infty$

# FIG.14

ELECTRICAL
RESISTANCE

$R_{max}$

$R_0$

$R_{min}$

0 $T_0$ $T_1$ $T_2$ TEMPERATURE

# FIG.15

DETECT
TEMPERATURE          DETECT FOCUS POSITION

WIRE
CONTRACTION          IN-FOCUS POSITION                    MOVEMENT
DIRECTION                                                 RANGE

# FIG.16

DETECT
TEMPERATURE          DETECT FOCUS POSITION

WIRE
CONTRACTION                                IN-FOCUS POSITION          MOVEMENT
DIRECTION                                                             RANGE

DETECT
TEMPERATURE          DETECT FOCUS POSITION

WIRE
CONTRACTION                                IN-FOCUS POSITION          MOVEMENT
DIRECTION                                                             RANGE

**EUROPEAN SEARCH REPORT**

Application Number

EP 11 17 8925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/074608 A1 (TOPLISS RICHARD [GB]) 25 March 2010 (2010-03-25) | 1,2,5-7 | INV. F03G7/06 G02B7/08 H02N10/00 G03B3/10 |
| A | * paragraphs [0058] - [0137]; figures 1-8 * | 3,4 | |
| A | EP 1 990 620 A2 (KONICA MINOLTA OPTO INC [JP]) 12 November 2008 (2008-11-12) * paragraphs [0013] - [0097] * | 1 | |
| A,P | EP 2 237 093 A1 (KONICA MINOLTA OPTO INC [JP]) 6 October 2010 (2010-10-06) * paragraphs [0007] - [0080] * | 1 | |

TECHNICAL FIELDS SEARCHED (IPC)

F03G
G02B
H02N
G03B

The present search report has been drawn up for all claims

| Place of search | Date of completion of the search | Examiner |
|---|---|---|
| Munich | 10 November 2011 | Stemmer, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 8925

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2011

| Patent document cited in search report | | Publication date | Patent family member(s) | | Publication date |
|---|---|---|---|---|---|
| US 2010074608 | A1 | 25-03-2010 | NONE | | |
| EP 1990620 | A2 | 12-11-2008 | EP | 1990620 A2 | 12-11-2008 |
| | | | JP | 2008274898 A | 13-11-2008 |
| | | | US | 2008278030 A1 | 13-11-2008 |
| EP 2237093 | A1 | 06-10-2010 | CN | 101910903 A | 08-12-2010 |
| | | | EP | 2237093 A1 | 06-10-2010 |
| | | | JP | 4539784 B2 | 08-09-2010 |
| | | | US | 2010296183 A1 | 25-11-2010 |
| | | | WO | 2009090960 A1 | 23-07-2009 |

EPO FORM P0459

For more details about this annex : see Official Journal of the European Patent Office, No. 12/82

**EP 2 423 504 A1**

## REFERENCES CITED IN THE DESCRIPTION

### Patent documents cited in the description

- JP 2007058075 A

- JP 2006183564 A